(19) **Europäisches Patentamt**

**European Patent Office**

**Office européen des brevets**

(11) **EP 1 001 611 A1**

(12) **EUROPEAN PATENT APPLICATION**

(43) Date of publication:
**17.05.2000 Bulletin 2000/20**

(51) Int. Cl.⁷: **H04N 1/60**

(21) Application number: **99308972.1**

(22) Date of filing: **11.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **13.11.1998 US 191739**

(71) Applicant:
**SEIKO EPSON CORPORATION**
**Shinjuku-ku, Tokyo 163-0811 (JP)**

(72) Inventors:
• **Lin, Tsung-Nan**
  **Suwa-shi, Nagano-ken (JP)**
• **Shu, Joseph**
  **Suwa-shi, Nagano-ken (JP)**

(74) Representative:
**Kenyon, Sarah Elizabeth et al**
**Miller Sturt Kenyon**
**9 John Street**
**London WC1N 2ES (GB)**

(54) **Improving color calibration accuracy by reiterative mapping**

(57) A color image reproduction system is able to reproduce high-fidelity replicas of original color images by using a color calibration transformation that is obtained by reiteratively deriving refined mapping functions. In one aspect of the invention, an initial reverse transformation is derived that by itself provides poor-quality calibration for a device that is characterized by a forward mapping transformation. One or more second reverse transformations are derived reiteratively for composites of the forward transformation and all reverse transformations derived thus far. A high-accuracy calibration transformation is obtained by combining the all of the derived reverse transformations. In a second aspect of the invention, an initial calibration transformation is derived that by itself provides poor-quality calibration for a device that is characterized by a forward transformation. A refined calibration transformation is derived by reiteratively applying calibration transformations to selected points in a color space to determine the relationship between the selected points and the corresponding points mapped by the forward transformation.

Fig. 6

**EP 1 001 611 A1**

**Description**

The present invention relates generally to color image reproduction systems, and relates more particularly to features that improve color matching between original color images and reproductions of those images.

Color image reproduction systems typically include an input device for obtaining a representation of an original image, an output device for generating a replica of the image, and a controlling device that processes signals received from the input device to generate new signals sent to the output device to produce the replica, which preferably is a high-fidelity reproduction of the original image. The controlling device may be implemented by a general-purpose computer with appropriate software and/or hardware for peripheral control and signal processing. Examples of an input device include hand held, flatbed and sheet-fed optical scanners, digital and video cameras, and software applications. In other words, an original image may be sensed or it may be created by a process. Examples of an output device include ink jet, laser and photolithography printers, electrostatic, flatbed and drum plotters, and video displays such as cathode ray tubes, thin-film-transistor and liquid crystal display panels.

Generally, input and output devices use some device dependent color-coordinate system to specify colors. These coordinate systems are often specified in some device-dependent color space that conveniently maps the color coordinates to the color-sensing or color-generating process of the particular device. The term "color space" refers to an $N$-dimensional space in which each point corresponds to a particular color.

One example of a three-dimensional color space is an RGB space in which point coordinates specify particular amounts of red (R), green (G) and blue (B) colorant that additively combine to represent a specific color. The operation of many scanners and color display devices may be conveniently controlled by signals that are specified in RGB space. An example of a four-dimensional color space is a CMYK color space in which point coordinates specify particular amounts of cyan (C), magenta (M), yellow (Y) and black (K) colorant that subtractively combine to represent a specific color. Another example is the three-dimensional CMY color space. The operation of many ink jet and laser printers may be conveniently controlled by signals that are specified in CMYK space or CMY space. Other color spaces that are related to particular devices are also known.

Many practical devices are capable of sensing or reproducing only a portion of the full range of colors that can be discerned by a human observer. A device "gamut" refers to the range of colors that can be sensed or reproduced by a particular device. For example, the gamut of a particular scanner refers to the range of colors that can be sensed by that scanner and the gamut of a particular printer refers to the range of colors that can be reproduced or printed by that printer.

A scanner gamut is determined by a variety of factors including the spectral response of the optical sensors, the spectral characteristics of color filters, spectral characteristics of the illumination source and the resolution and linearity of analog-to-digital converters.

A printer gamut is determined by a variety of factors including spectral characteristics of colorants such as ink, spectral and porosity characteristics of media such as paper, resolution or dots-per-inch of the printed image, halftoning methods and use of dithering, if any.

A video display gamut is determined by a variety of factors including spectral characteristics of the light emitting material, type of display device, resolution of pixels or video lines, and excitation voltage.

Although it is possible in principle to construct a color image reproduction system by merely connecting an output device directly to an input device, the results generally would not be satisfactory because the device-dependent coordinate systems and color spaces for the input and output devices are generally not the same. Even if the two sets of coordinate systems and color spaces are the same, the fidelity of the reproduced image as compared to an original image would probably be very poor because the gamut of the input device generally is not co-extensive with the gamut of the output device. Values representing "out-of-gamut" colors that are not in the output device gamut cannot be reproduced exactly. Instead, some "in-gamut" color that is in the gamut of the output device must be substituted for each out-of-gamut color.

Color image reproduction systems can achieve higher fidelity reproductions of original images by applying one or more calibration transformations to convert point coordinates in one color space into appropriate point coordinates in another color space. These transformations may be conveniently performed by the controlling device, mentioned above.

The calibration transformations for many practical devices are non-linear and cannot be easily expressed in some analytical or closed form; therefore, practical considerations make accurate implementations difficult to achieve. Many known methods implement these transformations as an interpolation of entries in a look-up table (LUT) derived by a process that essentially inverts relationships between device responses to known input values. For example, a calibration transformation for an input device may be derived by using a medium conveying patches of known color values in some device-independent color space (DICS) such as the Commission International de L'Eclairage (CIE) 1931 XYZ space, scanning the medium with the input device to generate a set of corresponding values in some input-DDCS such as RGB color space, and constructing an input LUT comprising table entries that associate the known color XYZ values with the scanned RGB values. In subsequent scans of other images, scanned RGB values can be converted into device-independent XYZ values by finding entries in the input LUT having RGB values that are close to the scanned values and then interpolating between the associated XYZ values in those table entries. Various interpolation techniques such as trilinear, prism, pyramidal and tetrahedral interpolation may be used.

Similarly, a calibration transformation for an output device may be derived by producing a medium with color patches in response to color values selected from some output-DDCS such as CMYK color space, determining the color value of the patches in a DICS such as CIE XYZ space by measuring the patches using a spectral photometer, and constructing an output LUT comprising table entries that associate the measured color XYZ values with the corresponding CMYK values. In subsequent output operations, XYZ color values can be converted into device-dependent CMYK values by finding entries in the output LUT having XYZ values that are close to the desired values and then interpolating between associated CMYK values in those table entries. Various interpolations such as those mentioned above may be used.

In operation, a color image reproduction system scans an original image to obtained scanned values in some input-DDCS, transforms the scanned values into some DICS, transforms these device-independent values from the DICS into some output DDCS and, in response, generates a replica of the original image.

Out-of-gamut colors may be given special treatment because these colors cannot be reproduced exactly. High-quality color image reproduction systems may use transformations to substitute an in-gamut color for each out-of-gamut color. Preferably, these transformations attempt to minimize the perceptible difference between an out-of gamut color and the corresponding substitute in-gamut color.

The accuracy of a calibration transformations implemented by a LUT is affected by the accuracy with which the entries of the LUT map corresponding points in color space and, because the transformations are non-linear, the accuracy of interpolation is affected by the distance between points represented by adjacent entries in the table.

One common method for improving accuracy is to reduce the distance between adjacent points in the table by increasing the density of the points represented in the LUT. Although this solution is simple in concept, it is often impractical because of the increase in cost for the memory or other circuits required to store a larger LUT. For example, in systems that store tables in random access memory (RAM), the cost for storing larger tables is higher because more RAM is required. The cost is also higher in other systems that store tables in a variety of digital and/or analog circuitry.

The present invention is directed toward improving the accuracy of the mappings provided by derived calibration transformations.

The present invention may be used in techniques that improve accuracy by increasing the number of entries in interpolation tables used to implement the transformations; however, the present invention is advantageous because it can improve accuracy without increasing the number of table entries. This is accomplished by refining the accuracy with which one or more table entries represent corresponding points in the mapped color spaces.

The present invention is a method for deriving a color-calibration transformation for a device that receives a device input and generates in response thereto a device output according to a forward transformation that maps the device input in a device-input color space to the device output in a device-output color space, the method including steps that perform the acts of: deriving an initial reverse transformation from the forward transformation, wherein either the device is an output device and the initial reverse transformation maps colors from a first color space to the device-input color space, or the device is an input device and the initial reverse transformation maps colors from the device-output color space to a second color space; deriving a second reverse transformation that is an approximate inverse of a composite of the forward transformation and the reverse transformation; and combining the initial reverse transformation with the second reverse transformation to obtain the color-calibration transformation.

Furthermore, the present invention is a computer-program of instructions for execution by a computer to perform a method for deriving a color-calibration transformation for a device that receives a device input and generates in response thereto a device output according to a forward transformation that maps the device input in a device-input color space to the device output in a device-output color space, wherein the method includes: deriving an initial reverse transformation from the forward transformation, wherein either the device is an output device and the initial reverse transformation maps colors from a first color space to the device-input color space, or the device is an input device and the initial reverse transformation maps colors from the device-output color space to a second color space; deriving a second reverse transformation that is an approximate inverse of a composite of the forward transformation and the reverse transformation; and combining the initial reverse transformation with the second reverse transformation to obtain the color-calibration transformation.

The present invention is a method for deriving a finished color-calibration transformation for a device that receives a device input and generates in response thereto a device output according to a forward transformation that maps the device input in a device-input color space to the device output in a device-output color space, the method including steps that perform the acts of: deriving an initial calibration transformation from the forward transformation, wherein either the device is an output device and the initial calibration transformation maps colors from a first color space to the device-input color space, or the device is an input device and the initial calibration transformation maps colors from the device-output color space to a second color space; selecting a first color and applying the initial calibration transformation to map the first color to a second color; obtaining a patch having the second color; scanning the patch to obtain a third color in response to the second color; deriving a refined calibration transformation by taking into account a mapping relationship between the second color and the third color; and deriving the finished calibration transformation from the refined calibration transformation.

Furthermore, the invention is a computer-program of instructions for execution by a computer to perform a method for deriving a color-calibration transformation for a device that receives a device input and generates in response thereto a device output according to a forward transformation that maps the device input in a device-input color space to the device output in a device-output color space, wherein the method includes: deriving an initial calibration transformation from the forward transformation, wherein either the device is an output device and the initial calibration transformation maps colors from a first color space to the device-input color space, or the device is an input device and the initial calibration transformation maps colors from the device-output color space to a second color space; selecting a first color and applying the initial calibration transformation to map the first color to a second color; obtaining a patch having the second color; scanning the patch to obtain a third color in response to the second color; deriving a refined calibration transformation by taking into account a mapping relationship between the second color and the third color; and deriving the finished calibration transformation from the refined calibration transformation.

The invention is an apparatus for use in a color image reproduction system including: an input device that receives input signals representing a color image and generates interim signals representing colors in a device-output color space in response thereto according to a forward transformation; and a controlling device that receives the interim signals and generates output signals representing colors in a device-independent color space according to a finished calibration transformation, wherein the finished calibration transformation was derived by: deriving an initial calibration transformation that maps colors from the device-output color space to the device-independent color space according to an initial lookup table having entries with values derived from coordinates of corresponding colors in the device-output color space and the device-independent color space as mapped by the forward transformation; selecting a first color in the device-output color space and applying the initial calibration transformation to map the first color to a second color in the device-independent color space; obtaining a patch having the second color by causing a calibrated output device to generate the patch in response to a signal representing the second color; scanning the patch with the input device to obtain a third color in the device-output color space in response to the second color; deriving the finished calibration transformation that maps colors from the device-output color space to the device-independent color space according to a refined lookup table having entries with values derived from coordinates of the second color in the device-independent color space and coordinates of the third color in the device-output color space.

The invention is an apparatus for use in a color image reproduction system including: a controlling device that receives input signals representing a color image in a device-independent color space and generates interim signals representing colors in a device-input color space in response thereto according to a finished calibration transformation; and an output device that receives the interim signals and generates a reproduction of the color image in response thereto according to a forward transformation; wherein the finished calibration transformation was derived by: deriving an initial calibration transformation that maps colors from the device-independent color space to the device-input color space according to an initial lookup table having entries with values derived from coordinates of corresponding colors in the device-independent color space and the device-input color space as mapped by the forward transformation; selecting a first color in the device-independent color space and applying the initial calibration transformation to map the first color to a second color in the device-input color space; obtaining a patch having the second color by causing the output device to generate the patch in response to a signal representing the second color; scanning the patch with a calibrated input device to obtain a third color in the device-independent color space in response to the second color; and deriving the finished calibration transformation that maps colors from the device-independent color space to the device-input color space according to a refined lookup table having entries with values derived from coordinates of the second color in the device-input color space and coordinates of the third color in the device-independent color space.

The various features of the present invention and its preferred embodiments may be better understood by referring to the following discussion and the accompanying drawings in which like reference numerals refer to like elements in the several figures. The contents of the following discussion and the drawings are set forth as examples only and should not be understood to represent limitations upon the scope of the present invention.

## BRIEF DESCRIPTION OF DRAWINGS

Fig. 1 illustrates major components in a typical color image reproduction system.
Fig. 2 illustrates major components in a typical personal computer system that may be used to implement various aspects of the present invention.

Figs. 3A and 3B illustrate major components for deriving calibration transformations for input and output devices.

Figs. 4A and 4B arc schematic representations of points and regions in color spaces, particularly corresponding points and regions in CIE XYZ space and CIE L*a*b*c space.

Figs. 5A through 5C illustrate the end-to-end effects of input or output devices and the system components that implement device calibration transformations.

Fig. 6 illustrates one method for deriving a refined calibration transformation according to a first aspect of the present invention.

Figs. 7A and 7B graphically illustrate the mapping of a forward transformation and an initial calibration transformation for an input device.

Fig. 8 graphically illustrates the mapping of an initial composite transformation for an input device.

Fig. 9 graphically illustrates the mapping of a second composite transformation for an input device.

Fig. 10 graphically illustrates the mapping of a forward transformation and a refined calibration transformation for an input device.

Fig. 11 illustrate one method for deriving a refined calibration transformation according to a second aspect of the present invention.

Figs. 12A and 12B graphically illustrate the mapping of a forward transformation and an initial calibration transformation for an output device.

Fig. 13 graphically illustrates the mapping of an initial composite transformation for an output device.

Fig. 14 graphically illustrates the mapping of a second composite transformation for an output device.

Fig. 15 graphically illustrate the mapping of a forward transformation and a refined calibration transformation for an output device.

## MODES FOR CARRYING OUT THE INVENTION

### A. Color Image Reproduction System Overview

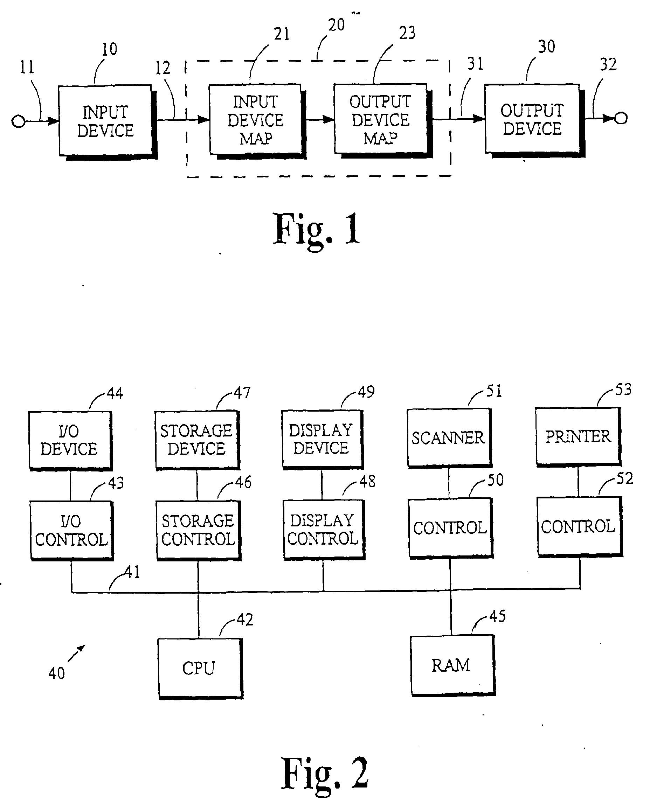

Fig. 1 illustrates major components in a typical color image reproduction system. Input device 10 receives from path 11 signals representing an original image and generates along path 12 an input-device-dependent representation of the original image. Controlling device 20 receives this representation from path 12 and, in response, generates along path 31 an output-device-dependent representation of the original image. Output device 30 receives this representation from path 31 and, in response, generates along path 32 a replica of the original image. The present invention is directed toward improving the fidelity with which the replica reproduces the original image.

Input device 10 may be essentially any type of scanner, camera or digital graphics application. If input device 10 is an optical scanner, for example, the signals received from path 11 could be considered to be optical. If input device 10 is an application for creating or manipulating color images, for example, the signals received from path 11 could be considered to represent commands or data. Throughout this disclosure, more particular mention will be made of optical scanners: however, many of the principles and features of the present invention may be applied in systems incorporating other types of input devices.

Output device 30 may be essentially any type of printer, plotter or display. If output device 30 is an ink-jet printer, for example, the replica generated along path 32 could be considered to be the printed image. If output device 30 is a CRT or TFT display, for example, the replica generated along path 32 could be considered to represent the image formed on the display device. Throughout this disclosure, more particular mention will be made of printers; however, many of the principles and features of the present invention may be applied in systems incorporating other types of output devices.

By its very nature, the characteristics of the input-device-dependent representation generated along path 12 depends on the characteristics of input device 10. Many optical scanners, for example, generate signals representing colors as points with red (R), green (G) and blue (B) coordinates in an RGB device-dependent color space (DDCS). For ease of discussion herein, the input-DDCS will generally be referred to as RGB space; however, many other color spaces and representations may be used to practice the present invention.

Similarly, the characteristics of the output-device-dependent representation generated along path 31 are chosen to match the characteristics of output device 30. Many color printers, for example, generate images in response to values representing cyan (C), magenta (M), yellow (Y) and black (K) coordinates in a CMYK DDCS. Many display devices such as cathode ray tubes or thin-film-transistor panels generate images in response to values representing red, green and blue in an RGB DDCS. Because of the device-dependent nature of these color spaces, scanner RGB spaces should not be equated to display RGB spaces. For ease of discussion herein, the output-DDCS will generally be referred to as CMYK space; however, many other color spaces and representations may be used to practice the present invention.

Controlling device 20 is responsible for transforming signals representing the original image in the input-DDCS into signals representing the same image in the output-DDCS. This may be accomplished by using input-device map 21 to implement a calibration transformation that maps the input-DDCS signals into a representation in a device-independent color space (DICS), and using output-device map 23 to implement a calibration transformation that maps the DICS representation into the signals representing the same image in the output-DDCS. Controlling device 20 may include other transformations and processes such as those described herein.

Controlling device 20 may be implemented by software and/or hardware in a general-purpose computer such as that illustrated in Fig. 2. Fig. 2 illustrates major components in one embodiment of a typical personal computer system 40. CPU 42 provides computing resources. I/O control 43 represents an interface to I/O device 44 such as a keyboard, mouse or modem. RAM 45 is system random access memory. Storage control 46 represents an interface to storage device 47 that includes a storage medium such as magnetic tape or disk, or an optical medium. The storage medium may be used to record programs of instructions for operating systems, utilities and applications, and may include embodiments of programs that implement various aspects of the present invention. Display control 48 provides an interface to display device 49. Control 50 represents an interface to scanner 51 which is an input device like an optical scanner. Control 52 represents an interface to printer 53 which is an output device like an ink jet color printer. Devices like scanner 51 may serve as input device 10 and devices like display device 49 or printer 53 may serve as output device 30.

In the embodiment shown, all major system components connect to bus 41 which may represent more than one physical bus. For example, some personal computers incorporate only a so called Industry Standard Architecture (ISA) bus. Other computers incorporate an ISA bus as well as a higher bandwidth bus conforming to some bus standard such as the VESA local bus standard or the PCI local bus standard. Preferably, display control 48 connects to a high-bandwidth bus to improve the speed of display. A bus architecture is not required to practice the present invention.

The functions of one or more computer components as well as various aspects of the present invention can be implemented in a wide variety of ways including discrete logic components, one or more ASICs and/or program-controlled processors. For example, Controlling device 20 may also be implemented by a special-purpose device. Furthermore, input-device map 21 and/or output-device map 23 may be implemented separately, perhaps integrated with the respective input/output device to provide a self-calibrated unit.

The manner in which controlling device 20 is implemented is not important to the present invention. Other implementations including digital and analog processing circuitry may used.

## B. Derivation of Input and Output Transformations

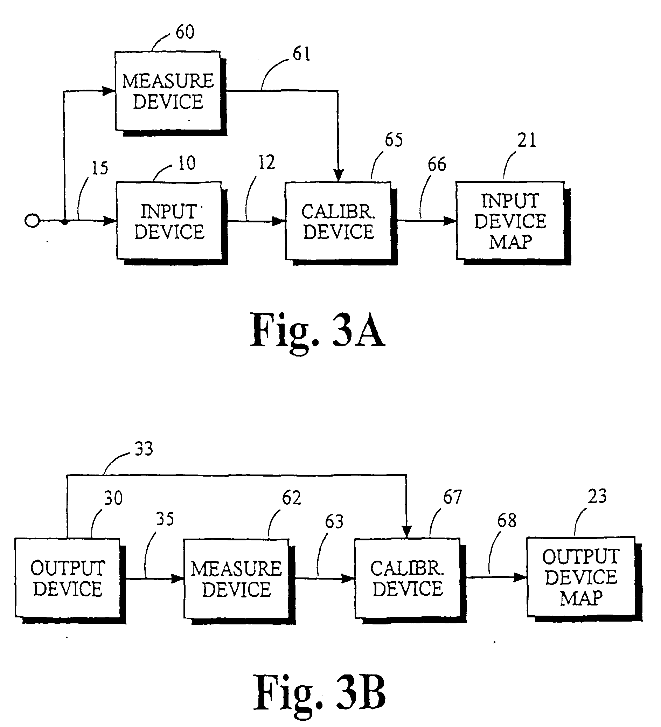

Figs. 3A and 3B illustrate major components for deriving input-device map 21 and output-device map 23. These illustrations and the following discussion are presented merely as examples to illustrate principles. These maps or calibration transformations may be derived in other ways.

Referring to Fig. 3A, input-device map 21 may be derived by scanning an image 15 that has known color characteristics. For example, image 15 may be one or more sheets of paper with areas or "patches" of known color. The color characteristics of these patches may be determined by measure device 60 such as a spectral photometer or colorimeter. According to the technique shown in the figure, measure device 60 scans image 15 and generates signals along path 61 representing the colors of the patches in some DICS such as the Commission International de L'Eclairage (CIE) 1931 XYZ space, referred to herein as CIE XYZ space. Input device 10 scans image 15 and generates signals along path 12 representing the colors of the patches in an input-DDCS such as scanner RGB space.

The device-independent and the device-dependent representations generated along paths 61 and 12, respectively, provide selected points in the two color spaces that define a forward transformation $f_I$ representing the way in which input device 10 converts real-world colors into a device-dependent representation. In response to these signals, calibration device 65 derives input-device map 21 that is a calibration transformation $r_I$ from the DDCS to the DICS. For example, if measure device 60 generates values in CIE XYZ space and input device 10 generates signals in some RGB space, then the forward transformation corresponding to input device 10 may be denoted as $f_I\text{: }\mathbf{XYZ} \rightarrow \mathbf{RGB}$ and the calibration transformation corresponding to input-device map 21 may be denoted as $r_I\text{: }\mathbf{RGB} \rightarrow \mathbf{XYZ.}$

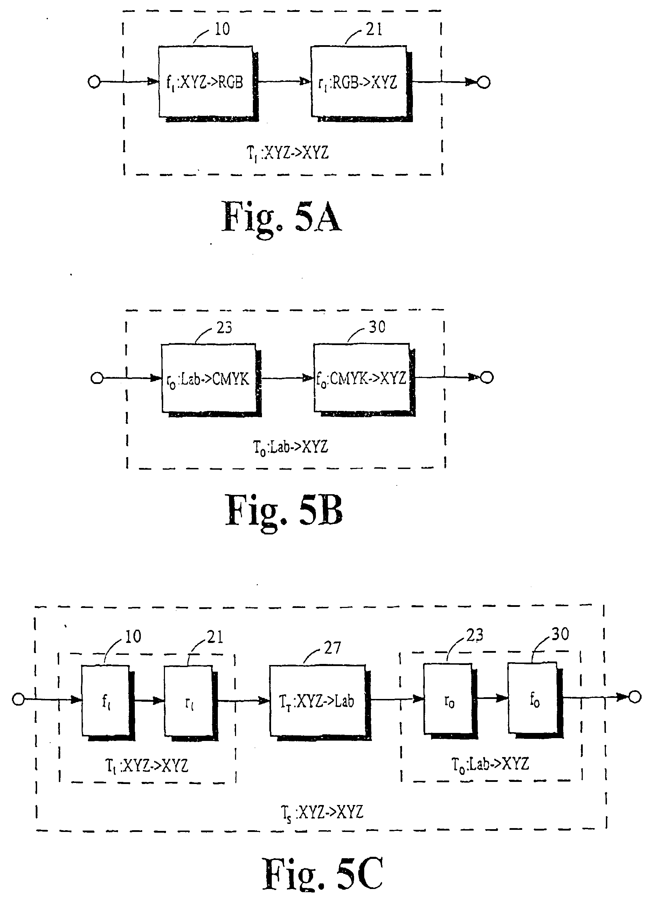

The way in which these two components work together is illustrated in Fig. 5A. Input device 10 effects a forward transformation $f_I$ on values representing real-world colors to obtain values in some input-DDCS. It is often convenient to represent real-world colors in some DICS such as CIE XYZ space. The forward transformation may then be expressed as a mapping from CIE XYZ space to some input-DDCS such as an RGB space as described above. Input-device map 21 effects a calibration transformation $r_I$ on the values in the input-DDCS to obtain mapped values in some DICS such as CIE XYZ space. The end-to-end effects of these two components is to effect a composite transformation from one DICS to another DICS. According to the example discussed above and illustrated in the figure, the composite transformation is, in principle, similar to the identity matrix that maps from CIE XYZ space to CIE XYZ space, which may be denoted as $T_I\text{: }\mathbf{XYZ} \rightarrow \mathbf{XYZ}$. In practice, however, calibration transformation $r_I$ is only an approximation of the desired inverse of forward transformation $f_I$. Arithmetic round off errors and errors in the calibration transformation introduce inaccuracies into the composite transformation.

Referring to Fig. 3B, output-device map 23 may be derived by using output device 30 to generate image 35 and determining the color characteristics of image 35. For example, image 35 may be one or more sheets of paper with patches that are analyzed by measure device 62 such as a spectral photometer or colorimeter. According to the technique shown in the Figure, measure device 62 scans image 35 and generates signals along path 63 representing the colors of the patches in some DICS such as CIE XYZ or CIE L*a*b* space. Output device 30 or some component controlling output device 30 generates signals along path 33 representing the patches in some output-DDCS such as printer CMYK space.

The device-independent and the device-dependent representations generated along paths 63 and 33, respectively, provide selected points in the two color spaces that define a forward transformation $f_o$ representing the way in which output device 30 converts the device-dependent representation into real-world colors. From these signals, calibration device 67 derives output-device map 23 that is a calibration transformation $r_o$ from the DICS to the DDCS. For example, if measure device 62 generates values in CIE L*a*b* space and output device 30 generates the image in response to signals in some CMYK space, then the forward transformation corresponding to output device 30 may be denoted as $f_o$: **CMYK → L*a*b*** and the calibration transformation corresponding to output-device map 23 may be denoted as $r_o$: **L*a*b* → CMYK**.

The way in which these two components work together is illustrated in Fig. 5B. Output-device map 23 effects a calibration transformation $r_o$ on values representing colors in some DICS to obtain values in some output-DDCS. Output device 30 effects a forward transformation $f_o$ on the values in the output-DDCS to obtain a replica image with real-world colors. If the real-world colors are expressed in some DICS such as CIE XYZ space, the transformation may then be expressed as a mapping from the output-DDCS to CIE XYZ as described above. The end-to-end effects of these two components is to effect a composite transformation from one DICS to another DICS. According to the example discussed above and illustrated in the figure, the composite transformation maps from CIE L*a*b* space to CIE XYZ space, which may be denoted as $T_o$: **L*a*b* → XYZ**. In practice, the overall effect of these two transformation is not perfect because calibration transformation $r_o$ is only an approximation of the desired inverse of forward transformation $f_o$. Arithmetic round off errors and errors in the calibration transformation introduce inaccuracies into the composite transformation.

A transformation between two arbitrary color spaces usually cannot be expressed in a closed or analytical form; therefore, these transformations are often implemented by a look-up table from which values of intermediate points may be obtained by multi-dimensional interpolation. Each entry in the LUT contains coordinates of a specific point in the first color space and coordinates of the corresponding point in the second color space. For any arbitrary point in the first color space, the coordinates of the corresponding point in the second color space can be approximated by interpolating coordinates of selected table entries. Trilinear, prism, pyramidal and tetrahedral interpolation techniques and a number variations of such techniques are known; however, some form of tetrahedral interpolation is generally preferred.

According to tetrahedral interpolation, the LUT is searched to find entries representing points in the first color space that define the vertices of the smallest tetrahedron that encloses the arbitrary point. Interpolation coefficients are calculated based on the relative position of the arbitrary point with respect to the four vertices. Finally, an approximation of the mapped point is obtained by using the interpolation coefficients to form a linear combination of the coordinates in the second color space that correspond to the four vertices. This linear combination may be represented as:

$$x_p = a_1 x_1 + a_2 x_2 + a_3 x_3 + a_4 x_4$$

$$y_p = a_1 y_1 + a_2 y_2 + a_3 y_3 + a_4 y_4$$

$$z_p = a_1 z_1 + a_2 z_2 + a_3 z_3 + a_4 z_4$$

where

$x_p$ = the point in second color space corresponding to the arbitrary point, $a_1$ through $a_4$ are the coefficients of interpolation,
$(x_1, y_1, z_1)$ = coordinates of vertex 1 in the second color space.
$(x_2, y_2, z_2)$ = coordinates of vertex 2 in the second color space,.
$(x_3, y_3, z_3)$ = coordinates of vertex 3 in the second color space, and
$(x_4, y_4, z_4)$ = coordinates of vertex 4 in the second color space.

Additional information regarding various forms of interpolation may be obtained from H.R. Kang, "Color Technology for Electronic Imaging Devices," SPIE Optical Engineering Press, 1997, pp. 64-101, 141-152 and 248-251, which is incorporated herein by reference.

## C. Accuracy of Derived Transformations

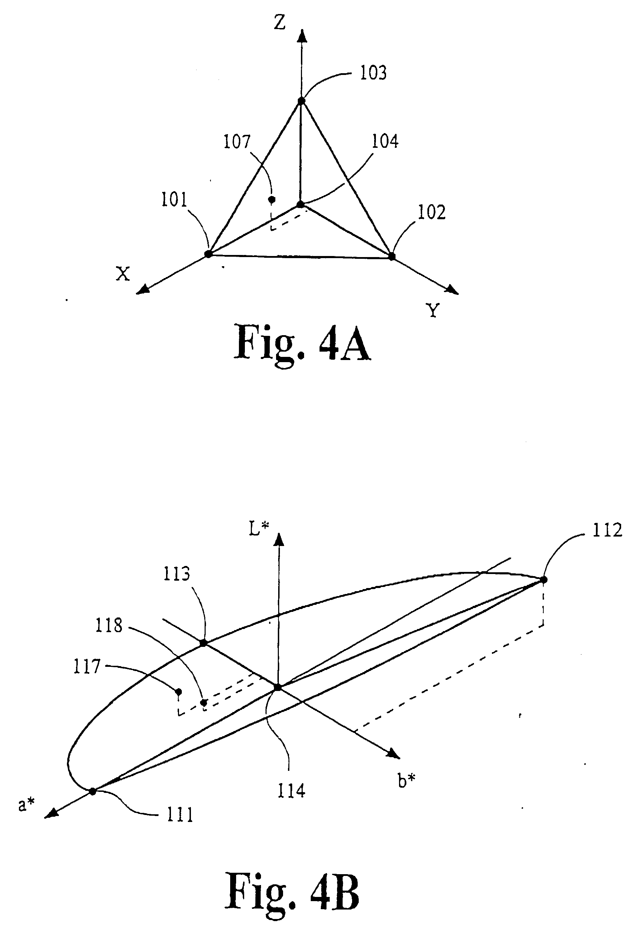

An implementation of a transformation by a linear interpolation LUT generally cannot be perfectly accurate because the desired transformation is highly non-linear. The non-linearity of transformations between typical color spaces is shown in Figs. 4A and 4B. These figures illustrate corresponding points and regions in CIE XYZ space and CIE L*a*b* space, discussed more fully below; however, these figures are useful to illustrate principles of a mapping relationship between two arbitrary color spaces. As shown in the figures, points 101-104 in a first color space correspond to points 111-114, respectively, in a second color space. The points along the four straight-line segments connecting these references points in the color space of Fig. 4A correspond to points along the curved and straight-line segments connecting the referenced points in the color space of Fig. 4B.

The transformation from CIE XYZ space into CIE L*a*b* space can be expressed by a set of analytical expressions. Although such analytical expressions are not available for many color space mappings, this particular mapping is useful to illustrate the inaccuracy of interpolation.

A point in CIE XYZ space may be mapped into CIE L*a*b* space by the following non-linear equations:

$$L^* = 116\, m(y/y_o) - 16$$
$$a^* = 500\, [m(x/x_o) - m(y/y_o)]$$
$$b^* = 500\, [m(y/y_o) - m(z/z_o)]$$

where

x,y,z = coordinates in CIE XYZ space,

$x_o, y_o, z_o$ = maximum value for the coordinates in CIE XYZ space,

$$m(t) = t^{1/3} \qquad \text{if } 0.008856 < t \le 1, \text{ and}$$
$$m(t) = 7.787\, t + (16/116) \qquad \text{if } 0 \le t < 0.008856$$

for the independent variable **t**.

Referring to Fig. 4A and 4B, point 107 represents a color in CIE XYZ space. By applying the three analytical expressions discussed above to the coordinates of point 107, an exact mapping for point 107 in CIE L*a*b* space can be obtained. This exact mapping is shown as point 117.

If the transformation is performed by interpolation, however, the mapping is not exact. Referring to Fig. 4A, point 107 in XYZ color space is shown to be within a tetrahedron that has vertices at points 101-104. By applying tetrahedral interpolation to corresponding points 111-114 in L*a*b* space according to the relative position of point 107 with respect to the tetrahedral vertices in XYZ space, an approximate position can be obtained for the corresponding point in L*a*b* space. This approximate location is illustrated as point 118. The distance between points 117 and 118 represents the interpolation error.

Incidentally, the particular mapping relationship shown in Figs. 4A and 4B is pertinent to many embodiments of systems that incorporate scanners and printers using two DICS. In particular, many embodiments map scanner signals into CIE XYZ space and map printer signals from CIE L*a*b* space. It is, therefore, necessary in these embodiments to provide a map or transformation from CIE XYZ to CIE L*a*b* space as shown in the figures. This transformation may be denoted $T_{\tau}$: **XYZ** → **L*a*b***. As mentioned above, this transformation is illustrated graphically in Figs. 4A and 4B. In such embodiments, controlling device 20 converts signals received from path 12 into signals generated along path 31 according to a transformation $T_c$ that is equivalent to a cascaded application of the transformations discussed above, denoted here as

$$T_C = r_1 \bullet T_T \bullet r_O,$$

or

$$T_C: \text{RGB} \rightarrow$$

$$\text{CMYK} = r_1: \text{RGB} \rightarrow \text{XYZ} \bullet T_T: \text{XYZ} \rightarrow \text{L*a*b*} \bullet r_O: \text{L*a*b*} \rightarrow \text{CMYK}.$$

The effect of the $T_\tau$ transformation in conjunction with the other transformations is illustrated in Fig. 5C. As explained above, input device 10 and input-device map 21 effect a transformation from one DICS to another DICS such as from CIE XYZ space to CIE XYZ space, denoted as $T_I$: **XYZ $\rightarrow$ XYZ**. Output-device map 23 and output device 30 effect a transformation from one DICS to another DICS such as from CIE L*a*b* space to CIE XYZ space, denoted as $T_O$: **L*a*b* $\rightarrow$ XYZ**. By effecting a transformation from CIE XYZ space to CIE L*a*b* space, the $T_\tau$ transformation provides the link required to couple the $T_I$ and the $T_O$ transformations together.

The end-to-end effect of these coupled transformations represents the overall operation of the color image reproduction system. According to the example discussed above and illustrated in the figure, this end-to-end effect is a mapping $T_s$ from CIE XYZ space to CIE XYZ space which is equivalent in principle to an identity transformation. In absence of arithmetic round off errors and accuracy errors in the component transformations, the color image reproduction system is a transparent system that is able to reproduce an original image perfectly.

Unfortunately, color image reproduction systems do not provide perfect reproductions of all original color images because input and output devices have limited gamuts that are generally not coextensive and because the calibration transformation $r_I$ and $r_O$ are not perfectly accurate inverses of the input and output device color mappings.

The accuracy of a calibration transformation implemented by a LUT is affected by the accuracy with which the entries of the LUT map corresponding points color space and, because the transformation is non-linear, the accuracy of interpolation is affected by the distance between points represented by adjacent entries in the table.

As mentioned above, a common method that improves accuracy by increasing the density of the points represented in the LUT is often not attractive because it increases the cost of memory or other circuits required to store a larger LUT.

The present invention is able to achieve greater accuracy without increasing LUT size by refining the accuracy with which one or more existing table entries represent corresponding points in the mapped color spaces. The present invention also may be used with techniques that improve accuracy by increasing the number of LUT entries.

**D. Improving Accuracy of Calibration Transformations**

In a preferred embodiment of a LUT that implements a transformation from a first color space to a second color space, the entries in the LUT correspond to uniformly spaced grid points in the first color space. It is often difficult if not impossible to obtain an exact correspondence between the two color spaces for specific grid points in the first color space; therefore, the values for LUT entries are often calculated by interpolation of the values that can be obtained for corresponding points in the two color spaces. The errors introduced by this interpolative process degrade the accuracy of the derived transformation.

The accuracy of a LUT derived in this mariner could be improved by obtaining a very large number of corresponding points in the two color spaces such that the points in the first color space are closely spaced; however, this is usually impractical. The present invention overcomes this problem by deriving an initial calibration transformation from a relatively small number of points representing widely separated colors and then refining the accuracy of selected table entries of this initial calibration transformation by either of two reiterative processes described below.

1. Reiterative Derivation of Reverse Transformations

According to a first aspect of the present invention, an initial reverse transformation is derived that approximates the ideal calibration transformation. One or more reverse transformations are subsequently derived that approximate the inverse of a composite transformation representing a combination of the forward transformation and all reverse transformations derived thus far. This process continues until the accuracy of the composite transformation is sufficient.

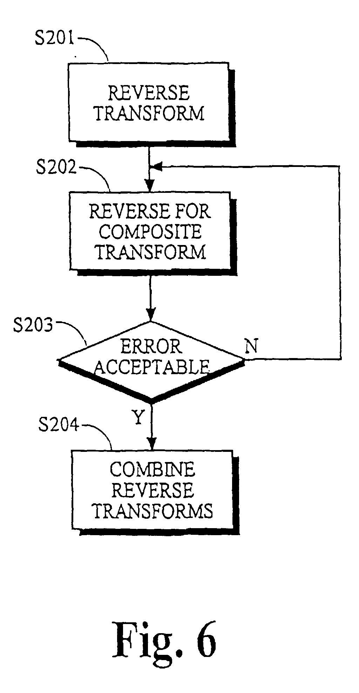

Fig. 6 illustrates one method according to the first aspect of the present invention for deriving a refined calibration transformation for a device characterized by a forward transformation that maps from one color space to another.

Step S201 derives an initial reverse transformation *r* according to any suitable technique such as those described above. No particular derivation technique is important. The combination of the forward and initial reverse transformations represents an initial composite transformation.

Step S202 derives a second reverse transformation *q* for the initial composite transformation. Preferably, the same technique used to derive the initial reverse transformation *r* is also used to derive the second reverse transformation *q*. The combination of the forward, initial reverse and second reverse transformations represents a second composite transformation.

Step S203 assesses the error of the second composite transformation. If the error is not acceptably small, the process reiterates by returning to step S202 to derive a third reverse transformation *p* for the second composite transformation. This reiteration continues by deriving additional reverse transformations for additional composite transformations until the error is acceptably small. When the error is acceptably small, the process continues with step S204, which forms the calibration transformation by combining all of the derived reverse transformations.

*a) Input-Device Transformations*

The principles underlying the first aspect of the present invention are first explained for input device 10. As explained above, input device 10 may be characterized by a forward transformation $f_I$ that maps from a DICS to a DDCS. For ease of explanation, this discussion assumes the mapping takes place from CIE XYZ color space to an RGB color space, which is denoted as $f_I$: **XYZ → RGB**. Using any of a wide variety of techniques known in the art, an initial reverse transformation $r_I$ is derived that maps from the RGB color space to some DICS such as, for example, the same XYZ color space, which is denoted as $r_I$: **RGB → XYZ**.

If the initial reverse transformation $r_I$ for this example is an exact inverse $f_I^{-1}$ of forward transformation $f_I$ then the two transformations $f_I \cdot r_I$ in cascade would equal the identity transformation *I*. Because it is usually impossible to find an exact inverse of the forward transformation $f_I$, however, the initial reverse transformation $r_I$ usually is only an approximation of the ideal inverse transformation $f_I^{-1}$ that is desired. This can be expressed as

$$f_I\text{: XYZ} \rightarrow \text{RGB} \bullet r_I\text{: RGB} \rightarrow \text{XYZ} = T_I\text{: XYZ} \rightarrow \text{XYZ} \approx I\text{: XYZ} \rightarrow \text{XYZ}$$

where

$f_I$ : **XYZ → RGB** = forward transformation of input device 10;
$r_I$: **RGB → XYZ** = initial reverse transformation of input device 10;
$T_I$: **XYZ → XYZ** = initial composite transformation for input device 10; and
*I*: **XYZ → XYZ** = identity transformation.

According to the present invention, a second reverse transformation $q_I$ is derived for the initial composite transformation $T_I$ using any of a wide variety of techniques that are suitable for deriving the initial reverse transformation $r_I$. This second reverse transformation, in cascade with the initial composite transformation, more closely approximates the identity transformation. If the second derived reverse transformation $q_I$ is an exact inverse to the initial composite transformation $T_I$ then the cascade of these two transformations would equal the identity transformation. In general, however, only an approximation of the inverse of the composite transformation can be derived. This can be expressed as:

$$T_I\text{: XYZ} \rightarrow \text{XYZ} \bullet q_I\text{: XYZ} \rightarrow \text{XYZ} = U_I\text{: XYZ} \rightarrow \text{XYZ} \approx I\text{: XYZ} \rightarrow \text{XYZ}$$

where

$q_I$: **XYZ → XYZ** = second derived reverse transformation; and
$U_I$: **XYZ → XYZ** = second composite transformation.

If the accuracy of the second composite transformation $U_l$ is sufficient, input-device map 21 can be obtained from a combination of the two reverse calibration transformations in cascade, which may be expressed as:

$$M_l: \text{RGB} \to \text{XYZ} = r_l: \text{RGB} \to \text{XYZ} \cdot q_l: \text{XYZ} \to \text{XYZ}$$

where

$M_l$: **RGB** $\to$ **XYZ** = input-device map 21.

If the accuracy of the second composite transformation $U_l$ is not sufficient, however, the refinement process continues by deriving a third reverse transformation $p_l$ for the second composite transformation $U_l$. The third reverse transformation, in cascade with the second composite transformation, approximates the identity transformation more closely than does the second reverse transformation in cascade with the initial composite transformation. The overall mapping that can be achieved with this third reverse transformation can be expressed as:

$$U_l: \text{XYZ} \to \text{XYZ} \cdot p_l: \text{XYZ} \to \text{XYZ} = V_l: \text{XYZ} \to \text{XYZ} \approx I: \text{XYZ} \to \text{XYZ}$$

where

$p_l$: **XYZ** $\to$ **XYZ** = third derived reverse transformation; and
$V_l$: **XYZ** $\to$ **XYZ** = third composite transformation.

If the accuracy of the third composite transformation $V_l$ is sufficient, input-device map 21 can be obtained from a combination of the three reverse transformations in cascade, which may be expressed as:

$$M_l: \text{RGB} \to \text{XYZ} = r_l: \text{RGB} \to \text{XYZ} \cdot q_l: \text{XYZ} \to \text{XYZ} \cdot p_l: \text{XYZ} \to \text{XYZ}.$$

If the accuracy of the third composite transformation $V_l$ is not sufficient, however, the refinement process continues in a reiterative manner by deriving a fourth reverse transformation.

*b) Output-Device Transformations*

The principles underlying a first aspect of the present invention are now explained for output device 30. As explained above, output device 30 may be characterized by a forward transformation $f_o$ that maps from a DDCS to a DICS. For ease of explanation, this discussion assumes the mapping takes place from a CMYK color space to the CIE XYZ color space, which is denoted as $f_o$: **CMYK** $\to$ **XYZ**. Using any of a wide variety of techniques known in the art, an initial reverse transformation $r_o$ is derived that maps from some DICS such as the CIE L*a*b* color space to the CMYK color space, which is denoted as $r_o$: **L\*a\*b\*** $\to$ **CMYK**.
If the initial reverse transformation $r_o$ is perfectly accurate, then the two transformations $r_o \cdot f_o$ in cascade would map perfectly from the CIE L*a*b* color space to the CIE XYZ color space. Because it is usually impossible to find a perfectly accurate reverse transformation, however, the initial reverse transformation $r_o$ usually is only an approximation of the ideal inverse transformation that is desired. This can be expressed as:

$$r_o: \text{L*a*b*} \to \text{CMYK} \cdot f_o: \text{CMYK} \to \text{XYZ} = T_o: \text{L*a*b*} \to \text{XYZ} \approx M: \text{L*a*b*} \to \text{XYZ}$$

where

$r_o$: **L\*a\*b\*** $\to$ **CMYK** = initial reverse transformation of output device 30;
$f_o$: **CMYK** $\to$ **XYZ** = forward transformation of output device 30;
$T_o$: **L\*a\*b\*** $\to$ **XYZ** = initial composite transformation for output device 30; and
$M$: **L\*a\*b\*** $\to$ **XYZ** = ideal transformation from L*a*b* space to XYZ space.

According to the present invention, a second reverse transformation $q_o$ is derived for the initial composite

transformation $T_O$ using any of a wide variety of techniques that are suitable for deriving the initial reverse transformation $r_O$. This second reverse transformation, in cascade with the initial composite transformation, more closely approximates the ideal transformation $M$ from L*a*b* color space to XYZ color space. If the second derived reverse transformation $q_O$ is an exact inverse to the initial composite transformation $T_O$ then the cascade of these two transformations would equal the ideal transformation. In general, however, only an approximation of the inverse of the composite transformation can be derived. This can be expressed as:

$$q_O\text{: L*a*b*} \rightarrow \text{L*a*b*} \bullet T_O\text{: L*a*b*} \rightarrow \text{XYZ} = U_O\text{: L*a*b*} \rightarrow \text{XYZ} \approx M\text{: L*a*b*} \rightarrow \text{XYZ}$$

where

$q_O$: **L*a*b*** $\rightarrow$ **L*a*b*** = second derived reverse transformation; and
$U_O$: **L*a*b*** $\rightarrow$ **XYZ** = second composite transformation.

If the accuracy of the second composite transformation $U_O$ is sufficient, output-device map 23 can be obtained from a combination of the two reverse transformations in cascade, which may be expressed as:

$$M_O\text{: L*a*b*} \rightarrow \text{XYZ} = q_O\text{: L*a*b*} \rightarrow \text{L*a*b*} \bullet r_O\text{: L*a*b*} \rightarrow \text{XYZ}$$

where

$M_O$: **L*a*b*** $\rightarrow$ **XYZ** = output-device map 23.

If the accuracy of the second composite transformation $U_O$ is not sufficient, however, the refinement process continues by deriving a third reverse transformation $p_O$ for the second composite transformation $U_O$. The third reverse transformation, in cascade with the second composite transformation, approximates the ideal transformation more closely than does the second reverse transformation in cascade with the initial composite transformation. The overall mapping that can be achieved with this third reverse transformation can be expressed as:

$$p_O\text{: L*a*b*} \rightarrow \text{L*a*b*} \bullet U_O\text{: L*a*b*} \rightarrow \text{XYZ} = V_O\text{: L*a*b*} \rightarrow \text{XYZ} \approx M\text{: L*a*b*} \rightarrow \text{XYZ}$$

where

$p_O$: **L*a*b*** $\rightarrow$ **L*a*b*** = third derived reverse transformation; and
$V_O$: **L*a*b*** $\rightarrow$ **XYZ** = third composite transformation.

If the accuracy of the third composite transformation $V_O$ is sufficient, output-device map 23 can be obtained from a combination of the three reverse transformations in cascade, which may be expressed as:

$$M_O\text{: L*a*b*} \rightarrow \text{XYZ} = p_O\text{: L*a*b*} \rightarrow \text{L*a*b*} \bullet q_O\text{: L*a*b*} \rightarrow \text{L*a*b*} \bullet r_O\text{: L*a*b*} \rightarrow \text{XYZ}.$$

If the accuracy of the third composite transformation $V_O$ is not sufficient, however, the refinement process continues in a reiterative manner by deriving a fourth reverse transformation.

2. Reiterative Derivation of Refined Calibration Transformations

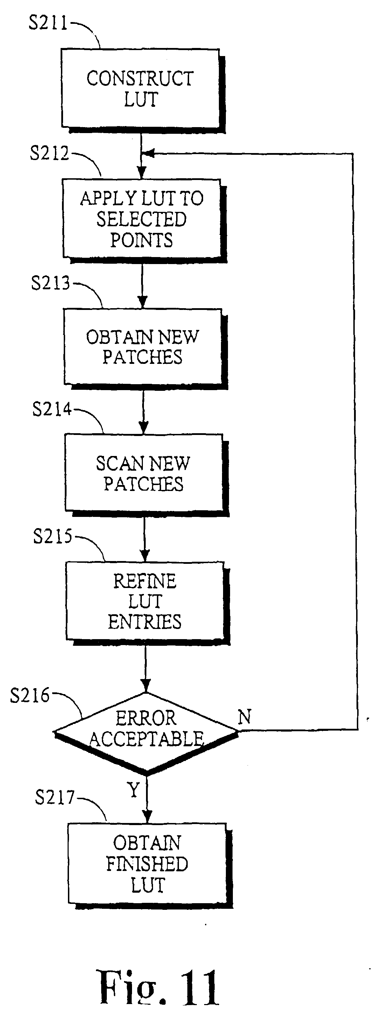

According to a second aspect of the present invention, an initial calibration transformation is derived that approximates the ideal calibration transformation. One or more refinements to the calibration transformation are subsequently derived so that the derived calibration transformation approximates the ideal calibration transformation more closely. These refinements are derived by applying the latest-derived calibration transformation and the forward transformation in an order that is the reverse of the order used during normal operation of the device to obtain selected mapping points in color space. This process continues until the accuracy of the calibration transformation is sufficient. A method for carrying out the second aspect of the present invention is illustrated in Fig. 11 and is described below in more detail.

*a) Derivation for an Input Device*

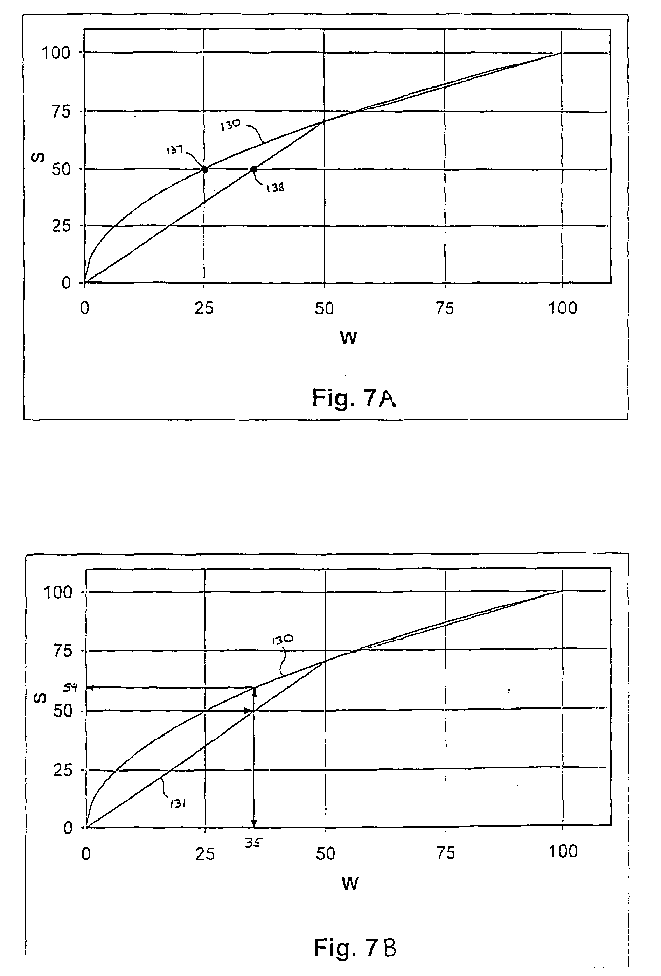

One way in which a second aspect of the present invention may be carried out for an input device is explained in the following paragraphs in conjunction with Figs. 7A through 10. For illustrative clarity, the graphs in these figures represent one-dimensional mapping transformations between two arbitrary color spaces designated **W** and **S**.

Referring to Fig. 7A, curve 130 illustrates forward transformation $f_l$: **W** $\rightarrow$ **S** that represents the mapping of input device 10. An initial calibration transformation $r_l$ that has been derived by essentially any known technique is represented by two straight lines that intersect curve 130 at points corresponding to **W**=0, **W**=50 and **W**=100. In this example, the reverse transformation $r_l$ approximates the inverse of the forward transformation $f_l$ so that the principles of the present invention maybe illustrated more clearly. As a result, the reverse transformation $r_l$ maps from the output color space of input device 10 to the input color space of input device 10. In practice, however, the present invention may be used to refine the accuracy of a reverse transformation $r_l$ that maps between essentially any color spaces.

In this example, a LUT having an entry for point **S**=50 is desired. If this entry is derived by interpolating the neighboring points in the initial calibration transformation $r_l$ at **W**=0 and **W**=50, the result would correspond to point 138. The inaccuracy of the derived table entry is represented by the distance between point 138 and the ideal point 137.

This inaccuracy in the mapping of the initial calibration transformation $r_l$ can be seen by applying the initial calibration transformation and the forward transformation in reverse order to map from one or more points selected in **S** space to corresponding points in **S** space. Preferably, these selected points are in a set of uniformly-spaced grid points in **S** space for which LUT entries are to be defined. In the example shown, a point is selected for **S**=50. The reverse mapping corresponds to an application of the initial calibration transformation $r_l$ followed by an application of the forward transformation $f_l$. The application of the initial calibration transformation $r_l$ is illustrated in Fig. 7B by the line that proceeds from the **S** axis at point **S**=50 to line 131, then to the **W** axis at about point **W**=35. The application of the forward transformation $f_l$ is illustrated by the line that proceeds from the **W** axis at about point **W**=35 to curve 130, then to the **S** axis at about point **S**=59.

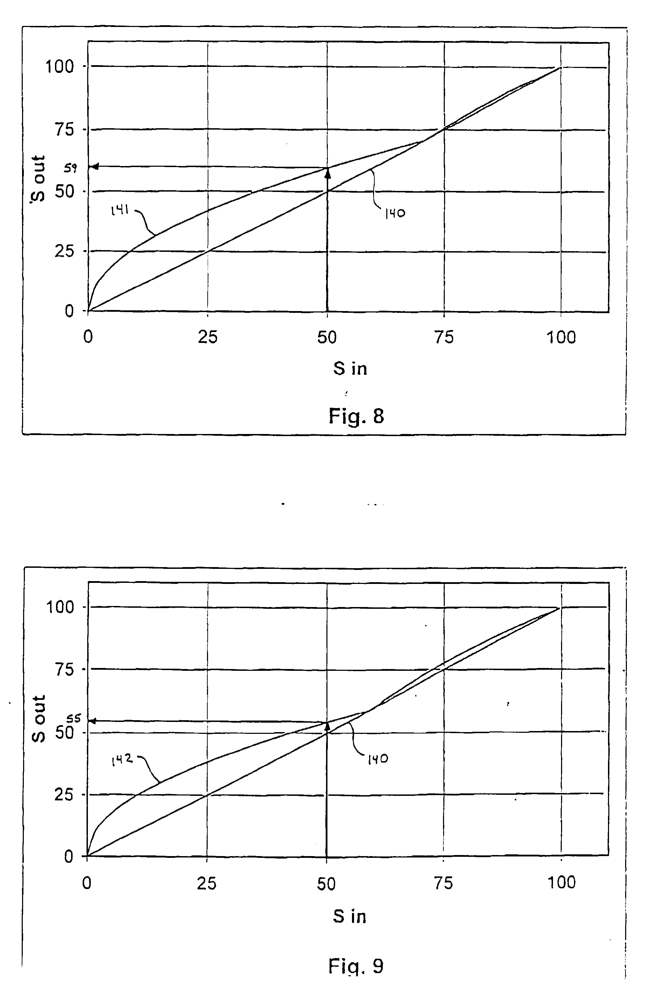

If the initial calibration transformation $r_l$ represented a perfect inverse to the forward transformation $f_l$, the reverse mapping would be ideal and would return an output equal to its input. Because the initial calibration transformation $r_l$ is only an approximation of the ideal calibration transformation, however, the input value (**S**=50) and the output value (about **S**=59) of the reverse mapping are not equal. The reverse mapping using the ideal and initial approximate calibration transformations are illustrated in Fig. 8. Line 140 represents the ideal reverse mapping in which the output value always equals the input value. Curve 141 represents the reverse mapping using the non-ideal initial calibration transformation illustrated in Figs. 7A and 7B.

Fig. 9 illustrates the mapping effect of a second calibration transformation $q_l$ that refines the accuracy of the reverse mapping so that an input of **S**=50 results in an output of about **S**= 55 rather than about **S**=59. One way in which this second calibration transformation $q_l$ can be derived is to obtain a color patch having a color in **W** color space with a coordinate value of about **W**=35 and then scan this patch with input device 10 to obtain the corresponding point in **S** color space. A calibrated printer or other output device can be used to obtain the color patch. These corresponding coordinates in the **S** and **W** color spaces can then be used to modify an entry in the LUT to implement the second calibration transformation $q_l$ that allows the reverse mapping to produce an output having a value of about **S**=55 when the input value is **S**=50. The reverse mapping effect of the second calibration transformation $q_l$ is illustrated by curve 142 in Fig. 9.

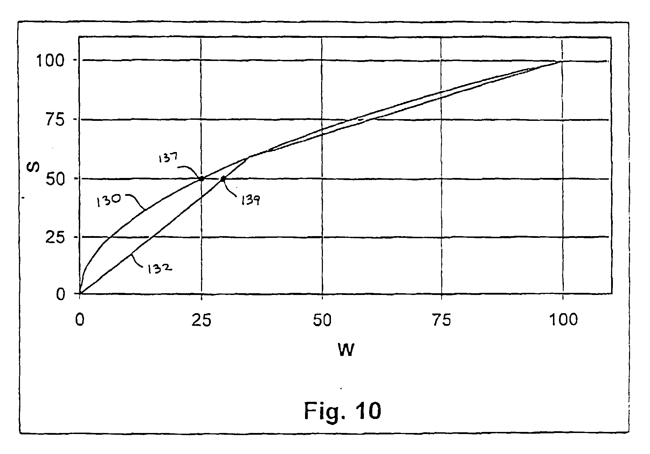

The second calibration transformation $q_l$ provides a refined approximation of the ideal calibration transformation. This refined approximation is illustrated by line 132 in Fig. 10. An LUT having an entry for point **S**=50 that is derived by interpolating the neighboring points in the refined calibration transformation $q_l$ at **W**=0 and at about **W**=35 results in point 139. A comparison of the graphs in Figs. 7A and 10 clearly shows that a table entry derived from the second calibration transformation $q_l$ is more accurate than that derived from the initial calibration transformation $r_l$. If this table entry is not sufficiently accurate, a table entry with even greater accuracy can be obtained by reiterating the process.

Fig. 11 illustrates one method according to the second aspect of the present invention for deriving a refined calibration transformation for input device 10 characterized by a forward transformation $f_l$ that maps from a first color space to a second color space. For example, a forward transformation $f_l$ may map from CIE XYZ space to an RGB space.

Step S211 constructs a LUT implementing an initial calibration transformation $r_l$ that maps from the second color space to some other color space such as the first color space. The LUT may be constructed according to any suitable technique such as those described above. No particular technique is important. In this example, the LUT is constructed to map from the RGB space to CIE XYZ space.

Step S212 applies the initial calibration transformation $r_I$ as implemented by the LUT to map one or more first points selected in the RGB color space to the corresponding second points in CIE XYZ space. Step S213 obtains a patch for each second point that has the color specified by the coordinate values of that point in CIE XYZ space. This may be accomplished, for example, by presenting signals representing the XYZ coordinates of each second point to a calibrated output device to print the desired patches.

Step S214 scans these patches using input device 10 to record the output signals generated in response to each patch and step S215 uses this new information to construct new LUT entries representing a refined calibration transformation $q_I$.

Step S216 assess the error of the refined calibration transformation $q_I$. If the error is not acceptably small, the process continues with step S212 by applying the refined calibration transformation $q_I$ to map the selected points from RGB space to CIE XYZ space. Steps S212 through S215 reiterate until step S216 determines that the error of the refined calibration transformation is acceptably small. Step S217 obtains the finished calibration transformation from the refined LUT.

*b) Derivation for an Output Device*

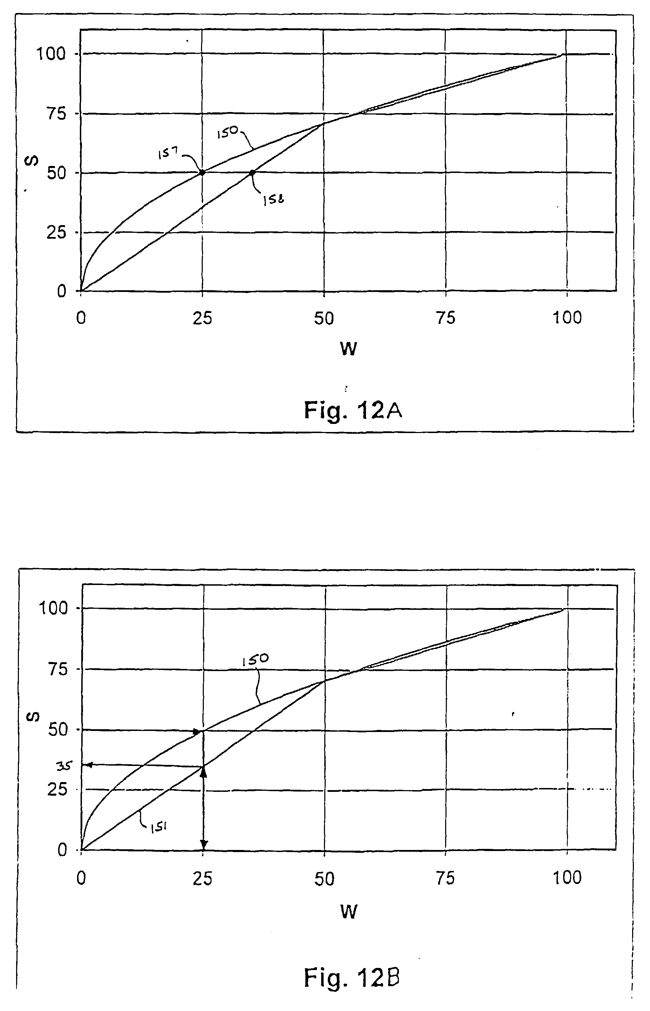

One way in which a second aspect of the present invention may be carried out for an output device is explained in the following paragraphs in conjunction with Figs. 12A through 15. For illustrative clarity, the graphs in these figures represent one-dimensional mapping transformations between two arbitrary color spaces designated **W** and **S**.

Referring to Fig. 12A, curve 150 illustrates forward transformation $f_o$: **W** → **S** that represents the mapping of output device 30. An initial reverse transformation $r_o$ that has been derived by essentially any known technique is represented by two straight lines that intersect curve 150 at points corresponding to **W**=0, **W**=50 and **W**=100. In this example, the reverse transformation $r_o$ approximates the inverse of the forward transformation $f_o$ so that the principles of the present invention may be illustrated more clearly. As a result, the reverse transformation $r_o$ maps from the output color space of output device 30 to the input color space of output device 30. In practice, however, the present invention may be used to refine the accuracy of a reverse transformation $r_o$ that maps between essentially any color spaces.

In this example, a LUT having an entry for point S=50 is desired. If this entry is derived by interpolating the neighboring points in the initial calibration transformation $r_o$ at **W**=0 and **W**=50, the result would correspond to point 158. The inaccuracy of the derived table entry is represented by the distance between point 158 and the ideal point 157.

This inaccuracy in the mapping of the initial composite transformation $T_C$ can be seen by applying the initial calibration transformation and the forward transformation in reverse order to map from one or more points selected in **S** space to corresponding points in **S** space. In the example shown, a point is selected for **S**=50. The reverse mapping corresponds to an application of the forward transformation $f_o$ followed by an application of the initial calibration transformation $r_o$. The application of the forward transformation $f_o$ is illustrated in Fig. 12B by the line that proceeds from the **S** axis at point **S**=50 to curve 150, then to the **W** axis at point **W**=25. The application of the initial calibration transformation $r_o$ is illustrated by the line that proceeds from the **W** axis at point **W**=25 to line segment 151, then to the **S** axis at about point **S**=35.

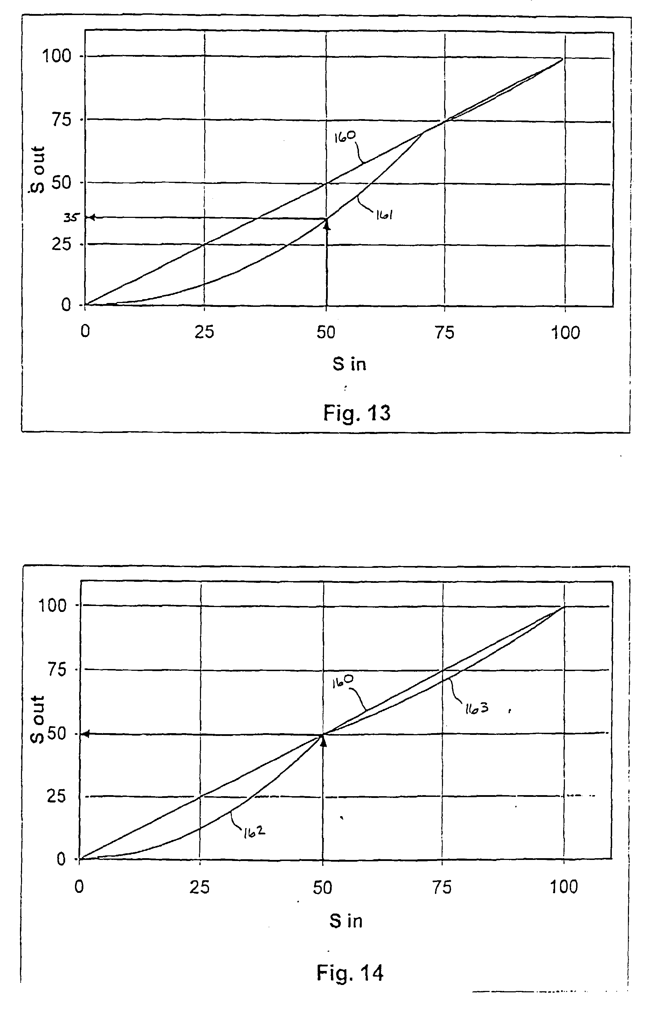

If the initial calibration transformation $r_o$ represented a perfect inverse to the forward transformation $f_o$, the reverse mapping would be ideal and would return an output equal to its input. Because the initial calibration transformation $r_o$ is only an approximation of the ideal calibration transformation, however, the input value (**S**=50) and the output value (about **S**=35) of the reverse mapping are not equal. The reverse mapping using the ideal and initial approximate calibration transformations are illustrated in Fig. 13. Line 160 represents the ideal reverse mapping in which the output value always equals the input value. Curve 161 represents the reverse mapping using the non-ideal initial calibration transformation illustrated in Figs. 12A and 12B.

Fig. 14 illustrates the mapping effect of a second calibration transformation $q_o$ that refines the accuracy of the reverse mapping so chat an input of **S**=50 results in an output of **S**=50. One way in which this second calibration transformation $q_o$ can be derived is to generate a signal representing a point in **S** color space with a coordinate **S**=50 and then to present this signal to output device 30 to generate a color patch. The color of this patch is measured by a calibrated device such as a spectral photometer or colorimeter to obtain the corresponding coordinate value in **W** color space. These corresponding coordinates can then be used to modify an entry in the LUT to implement the second calibration transformation $q_o$ that allows the reverse mapping to produce an output having a value **S**=50 when the input value is **S**=50. The reverse mapping effect of the second calibration transformation $q_o$ is illustrated by curves 162 and 163 in Fig. 14.

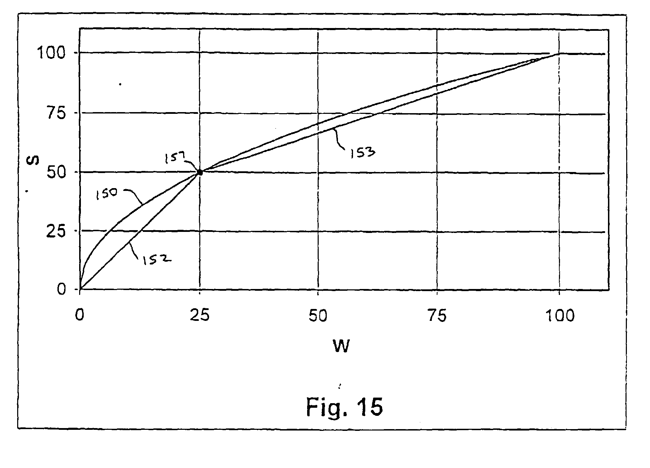

The second calibration transformation $q_o$ provides a refined approximation of the ideal calibration transformation. This refined approximation is illustrated by line segments 152 and 153 in Fig. 15. An LUT having an entry for point **S**=50 that is derived by interpolating the neighboring points in the refined calibration transformation $q_o$ results in a point that is equal to, or substantially equal to, the ideal point 137. A comparison of the graphs in Figs. 12A and 15 clearly shows that a table entry derived from the second calibration transformation $q_o$ is more accurate than that derived from the initial calibration transformation $r_o$.

Fig. 11 illustrates one method according to the second aspect of the present invention for deriving a refined calibration transformation for output device 30 characterized by a forward transformation $f_o$ that maps from a second color space to a third color space. For example, a forward transformation $f_o$ may map from a CMYK space to CIE XYZ space.

Step S211 constructs a LUT implementing an initial calibration transformation $r_o$ that maps from some first color space to the second color space. The first and third color spaces may be the same. The LUT may be constructed according to any suitable technique such as those described above. No particular technique is important. In this example, the LUT is constructed to map from the CE L*a*b* space to CMYK space.

Step S212 applies the initial calibration transformation $r_o$ as implemented by the LUT to map one or more first points selected in the CIE L*a*b* color space to the corresponding second points in CMYK space. Step S213 presents signals to output device 30 that represent the second points in CMYK space to print patches of various colors.

Step S214 scans these patches using a calibrated device such as a spectral photometer or colorimeter to record the output signals generated in response to each patch and step S215 uses this new information to construct new LUT entries representing a refined calibration transformation $q_o$.

Step S216 assess the error of the refined calibration transformation $q_o$. If the error is not acceptably small, the process continues with step S212 by applying the refined calibration transformation $q_o$ to map the selected points from L*a*b* space to CMYK space. Steps S212 through S215 reiterate until step S216 determines that the error of the refined calibration transformation is acceptably small. Step S217 obtains the finished calibration transformation from the refined LUT.

**Claims**

1. A method for deriving a color-calibration transformation for a device that receives a device input and generates in response thereto a device output according to a forward transformation that maps the device input in a device-input color space to the device output in a device-output color space, the method comprising steps that perform the acts of:

   deriving an initial reverse transformation from the forward transformation, wherein either the device is an output device and the initial reverse transformation maps colors from a first color space to the device-input color space, or the device is an input device and the initial reverse transformation maps colors from the device-output color space to a second color space;
   deriving a second reverse transformation that is an approximate inverse of a composite of the forward transformation and the reverse transformation; and
   combining the initial reverse transformation with the second reverse transformation to obtain the color-calibration transformation.

2. A method according to claim 1 that further comprises reiteratively deriving one or more additional reverse transformations that are an approximate inverse of composites of the forward transform and all other reverse transformations derived thus far, wherein the color-calibration transformation is obtained by combining the initial reverse transformation with the second reverse transformation and the one or more additional reverse transformations.

3. A method according to claim 1 or 2 wherein the device is an input device and wherein:

   the initial reverse transformation is derived by constructing a first lookup table having entries with values derived from coordinates of corresponding colors in the device-output color space and in the second color space as mapped by the forward transformation;
   the second reverse transformation is derived by constructing a second lookup table having entries with values derived from coordinates of corresponding colors in the second color space and in the device-input color space; and
   the second reverse transformation is combined with the initial reverse transformation to obtain the color-calibration transformation by combining entries of the second lookup table with entries of the first lookup table.

4. A method according to one of claims 1 to 3 wherein the device is an output device and wherein:

   the initial reverse transformation is derived by constructing a first lookup table having entries with values derived from coordinates of corresponding colors in the first color space and the device-input color space as mapped by the forward transformation;

the second reverse transformation is derived by constructing a second lookup table having entries with values derived from coordinates of corresponding colors in the device-output color space and in the first color space; and

the second reverse transformation is combined with the initial reverse transformation to obtain the color-calibration transformation by combining entries of the second lookup table with entries of the first lookup table.

5. A method according to one of claims 1 to 4 wherein the initial reverse transformation is implemented by a lookup table having a first number of table entries and the color-calibration transformation is implemented by a lookup table having a second number of table entries, and wherein the first number is equal to or substantially equal to the second number.

6. A computer-program of instructions for execution by a computer to perform a method for deriving a color-calibration transformation for a device that receives a device input and generates in response thereto a device output according to a forward transformation that maps the device input in a device-input color space to the device output in a device-output color space, wherein the method comprises:

deriving an initial reverse transformation from the forward transformation, wherein either the device is an output device and the initial reverse transformation maps colors from a first color space to the device-input color space, or the device is an input device and the initial reverse transformation maps colors from the device-output color space to a second color space;

deriving a second reverse transformation that is an approximate inverse of a composite of the forward transformation and the reverse transformation; and

combining the initial reverse transformation with the second reverse transformation to obtain the color-calibration transformation.

7. A computer-program according to claim 6 that further comprises reiteratively deriving one or more additional reverse transformations that are an approximate inverse of composites of the forward transform and all other reverse transformations derived thus far, wherein the color-calibration transformation is obtained by combining the initial reverse transformation with the second reverse transformation and the one or more additional reverse transformations.

8. A computer-program according to claim 6 or 7 wherein the device is an input device and wherein:

the initial reverse transformation is derived by constructing a first lookup table having entries with values derived from coordinates of corresponding colors in the device-output color space and in the second color space as mapped by the forward transformation;

the second reverse transformation is derived by constructing a second lookup table having entries with values derived from coordinates of corresponding colors in the second color space and in the device-input color space; and

the second reverse transformation is combined with the initial reverse transformation to obtain the color-calibration transformation by combining entries of the second lookup table with entries of the first lookup table.

9. A computer-program according to one of claims 6 to 8 wherein the device is an output device and wherein:

the initial reverse transformation is derived by constructing a first lookup table having entries with values derived from coordinates of corresponding colors in the first color space and the device-input color space as mapped by the forward transformation;

the second reverse transformation is derived by constructing a second lookup table having entries with values derived from coordinates of corresponding colors in the device-output color space and in the first color space; and

the second reverse transformation is combined with the initial reverse transformation to obtain the color-calibration transformation by combining entries of the second lookup table with entries of the first lookup table.

10. A computer-program according to one of claims 6 to 9 wherein the initial reverse transformation is implemented by a lookup table having a first number of table entries and the color-calibration transformation is implemented by a lookup table having a second number of table entries, and wherein the first number is equal to or substantially equal to the second number.

**11.** A method for deriving a finished color-calibration transformation for a device that receives a device input and generates in response thereto a device output according to a forward transformation that maps the device input in a device-input color space to the device output in a device-output color space, the method comprising steps that perform the acts of:

deriving an initial calibration transformation from the forward transformation, wherein either the device is an output device and the initial calibration transformation maps colors from a first color space to the device-input color space, or the device is an input device and the initial calibration transformation maps colors from the device-output color space to a second color space;

selecting a first color and applying the initial calibration transformation to map the first color to a second color;

obtaining a patch having the second color;

scanning the patch to obtain a third color in response to the second color;

deriving a refined calibration transformation by taking into account a mapping relationship between the second color and the third color; and

deriving the finished calibration transformation from the refined calibration transformation.

**12.** A method according to claim 11 that reiteratively selects a new first color, applies the initial calibration transformation to map the new first color to a new second color, obtains a new patch having the new second color, scans the patch to obtain a new third color, and derives a further refined calibration transformation by taking into account a mapping relationship between the new second color and the new third color.

**13.** A method according to claim 11 or 12 wherein the device is an input device and wherein:

the initial calibration transformation is derived by constructing a lookup table having entries with values derived from coordinates of corresponding colors in the device-output color space and the second color space as mapped by the forward transformation;

the first color is selected in the device-output color space and the initial calibration transformation is applied to map the first color to a second color in the second color space;

the patch is obtained by causing a calibrated output device to generate the patch in response to a signal representing the second color;

the patch is scanned by the input device to obtain the third color in the device-output color space; and

the refined calibration transformation is derived by forming lookup table entries with values derived from coordinates of the second color in the second color space and coordinates of the third color in the device-output color space.

**14.** A method according to one of claims 11 to 13 wherein the first color corresponds to a point in a set of uniformly spaced points in the device-output color space.

**15.** A method according to one of claims 11 to 14 wherein the device is an output device and wherein:

the initial calibration transformation is derived by constructing a lookup table having entries with values derived from coordinates of corresponding colors in the first color space and the device-input color space as mapped by the forward transformation;

the first color is selected in the first color space and the initial calibration transformation is applied to map the first color to a second color in the device-input color space;

the patch is obtained by causing the output device to generate the patch in response to a signal representing the second color;

the patch is scanned by a calibrated input device to obtain the third color in the first color space; and

the refined calibration transformation is derived by forming lookup table entries with values derived from coordinates of the second color in the device-input color space and coordinates of the third color in the first color space.

**16.** A method according to claim 15 wherein the first color corresponds to a point in a set of uniformly spaced points in the first color space.

**17.** A method according to one of claims 11 to 16 wherein the initial calibration transformation is implemented by a lookup table having a first number of table entries and the finished color-calibration transformation is implemented by a lookup table having a second number of table entries, and wherein the first number is equal to or substantially equal to the second number.

18. A computer-program of instructions for execution by a computer to perform a method for deriving a color-calibration transformation for a device that receives a device input and generates in response thereto a device output according to a forward transformation that maps the device input in a device-input color space to the device output in a device-output color space, wherein the method comprises:

deriving an initial calibration transformation from the forward transformation, wherein either the device is an output device and the initial calibration transformation maps colors from a first color space to the device-input color space, or the device is an input device and the initial calibration transformation maps colors from the device-output color space to a second color space;
selecting a first color and applying the initial calibration transformation to map the first color to a second color;
obtaining a patch having the second color;
scanning the patch to obtain a third color in response to the second color;
deriving a refined calibration transformation by taking into account a mapping relationship between the second color and the third color; and
deriving the finished calibration transformation from the refined calibration transformation.

19. A computer-program according to claim 18 that reiteratively selects a new first color, applies the initial calibration transformation to map the new first color to a new second color, obtains a new patch having the new second color, scans the patch to obtain a new third color, and derives a further refined calibration transformation by taking into account a mapping relationship between the new second color and the new third color.

20. A computer-program according to claim 18 or 19 wherein the device is an input device and wherein:

the initial calibration transformation is derived by constructing a lookup table having entries with values derived from coordinates of corresponding colors in the device-output color space and the second color space as mapped by the forward transformation;
the first color is selected in the device-output color space and the initial calibration transformation is applied to map the first color to a second color in the second color space;
the patch is obtained by causing a calibrated output device to generate the patch in response to a signal representing the second color;
the patch is scanned by the input device to obtain the third color in the device-output color space; and
the refined calibration transformation is derived by forming lookup table entries with values derived from coordinates of the second color in the second color space and coordinates of the third color in the device-output color space.

21. A computer-program according to one of claims 18 to 20 wherein the first color corresponds to a point in a set of uniformly spaced points in the device-output color space.

22. A computer-program according to one of claims 18 to 21 wherein the device is an output device and wherein:

the initial calibration transformation is derived by constructing a lookup table having entries with values derived from coordinates of corresponding colors in the first color space and the device-input color space as mapped by the forward transformation;
the first color is selected in the first color space and the initial calibration transformation is applied to map the first color to a second color in the device-input color space;
the patch is obtained by causing the output device to generate the patch in response to a signal representing the second color;
the patch is scanned by a calibrated input device to obtain the third color in the first color space; and
the refined calibration transformation is derived by forming lookup table entries with values derived from coordinates of the second color in the device-input color space and coordinates of the third color in the first color space.

23. A computer-program according to claim 22 wherein the first color corresponds to a point in a set of uniformly spaced points in the first color space.

24. A computer-program according to one of claims 18 to 23 wherein the initial calibration transformation is implemented by a lookup table having a first number of table entries and the finished color-calibration transformation is implemented by a lookup table having a second number of table entries, and wherein the first number is equal to or substantially equal to the second number.

25. An apparatus for use in a color image reproduction system comprising:

art input device that receives input signals representing a color image and generates interim signals representing colors in a device-output color space in response thereto according to a forward transformation; and

a controlling device that receives the interim signals and generates output signals representing colors in a device-independent color space according to a finished calibration transformation, wherein the finished calibration transformation was derived by:

deriving an initial calibration transformation that maps colors from the device-output color space to the device-independent color space according to an initial lookup table having entries with values derived from coordinates of corresponding colors in the device-output color space and the device-independent color space as mapped by the forward transformation;

selecting a first color in the device-output color space and applying the initial calibration transformation to map the first color to a second color in the device-independent color space;

obtaining a patch having the second color by causing a calibrated output device to generate the patch in response to a signal representing the second color;

scanning the patch with the input device to obtain a third color in the device-output color space in response to the second color;

deriving the finished calibration transformation that maps colors from the device-output color space to the device-independent color space according to a refined lookup table having entries with values derived from coordinates of the second color in the device-independent color space and coordinates of the third color in the device-output color space.

26. An apparatus according to claim 25 wherein the first color corresponds to a point in a set of uniformly spaced points in the device-output color space.

27. An apparatus for use in a color image reproduction system comprising:

a controlling device that receives input signals representing a color image in a device-independent color space and generates interim signals representing colors in a device-input color space in response thereto according to a finished calibration transformation; and

an output device that receives the interim signals and generates a reproduction of the color image in response thereto according to a forward transformation;

wherein the finished calibration transformation was derived by:

deriving an initial calibration transformation that maps colors from the device-independent color space to the device-input color space according to an initial lockup table having entries with values derived from coordinates of corresponding colors in the device-independent color space and the device-input color space as mapped by the forward transformation;

selecting a first color in the device-independent color space and applying the initial calibration transformation to map the first color to a second color in the device-input color space;

obtaining a patch having the second color by causing the output device to generate the patch in response to a signal representing the second color;

scanning the patch with a calibrated input device to obtain a third color in the device-independent color space in response to the second color; and

deriving the finished calibration transformation that maps colors from the device-independent color space to the device-input color space according to a refined lockup table having entries with values derived from coordinates of the second color in the device-input color space and coordinates of the third color in the device-independent color space.

28. An apparatus according to claim 27 wherein the first color corresponds to a point in a set of uniformly spaced points in the device-independent color space.

29. A computer-readable medium comprising the computer-program as claimed in any one of claims 6 to 10 and 18 to 24.

Fig. 1

Fig. 2

# Fig. 3A

# Fig. 3B

Z

103

107    104

101    102

X

Y

# Fig. 4A

L*

112

113

118

117

111

a*

114

b*

# Fig. 4B

Fig. 5A

Fig. 5B

Fig. 5C

S201

REVERSE
TRANSFORM

S202

REVERSE FOR
COMPOSITE
TRANSFORM

S203

ERROR
ACCEPTABLE    N

Y

S204

COMBINE
REVERSE
TRANSFORMS

Fig. 6

Fig. 7A

Fig. 7B

Fig. 8

Fig. 9

Fig. 10

S211 —

CONSTRUCT
LUT

S212 —

APPLY LUT TO
SELECTED
POINTS

S213 —

OBTAIN NEW
PATCHES

S214 —

SCAN NEW
PATCHES

S215 —

REFINE
LUT
ENTRIES

S216 —

ERROR
ACCEPTABLE    N

Y

S217 —

OBTAIN
FINISHED
LUT

Fig. 11

Fig. 12A

Fig. 12B

Fig. 13

Fig. 14

Fig. 15

**European Patent Office**

# EUROPEAN SEARCH REPORT

**Application Number**

EP 99 30 8972

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 750 419 A (FUJI PHOTO FILM CO LTD) 27 December 1996 (1996-12-27) * abstract; figures 1-3,6,7 * * page 3, line 36 - page 4, line 18 * * page 5, line 54 - page 6, line 4 * --- | 1-29 | H04N1/60 |
| A | WO 94 08274 A (LIANG TONY ZHONGJIE ;DU PONT (US)) 14 April 1994 (1994-04-14) * abstract * * page 25, line 16 - page 28, line 27 * * page 30, line 7 - page 31, line 18; claim 1 * * page 32, line 9 - page 33, line 23 * --- | 1-28 | |
| A | PO-CHIEH HUNG: "COLORIMETRIC CALIBRATION IN ELECTRONIC IMAGING DEVICES USING A LOOK-UP-TABLE MODEL AND INTERPOLATIONS" JOURNAL OF ELECTRONIC IMAGING,US,SPIE + IS&T, vol. 2, no. 1, January 1993 (1993-01), page 53-61 XP000355272 ISSN: 1017-9909 * abstract; figures 1,2 * * paragraphs [02.1],[03.2],[04.1],[0006] * --- | 1,6,11, 18,25,27 | |
| A | US 5 491 568 A (WAN SHIJIE) 13 February 1996 (1996-02-13)  * abstract; figures 1,10 * * column 1, line 42 - column 2, line 2 * * column 4, line 21 - column 5, line 67 * --- | 1-5, 11-17, 25-27 | |
| A | CHUNG P -C: "COLORIMETRIC CALIBRATIOn FOR SCANNERS AND MEDIA" PROCEEDINGS OF THE SPIE, vol. 1448, 27 February 1991 (1991-02-27), pages 164-174, XP000616908 * paragraph [0004] * --- -/-- | 3 | |

**TECHNICAL FIELDS SEARCHED (Int.Cl.7)**

H04N

The present search report has been drawn up for all claims

| Place of search | Date of completion of the search | Examiner |
|---|---|---|
| BERLIN | 26 January 2000 | Kassow, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 99 30 8972

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 674 429 A (EASTMAN KODAK CO) 27 September 1995 (1995-09-27) * abstract; figures 1-9; tables 1,2 * ----- | 1,6,11, 18,25,27 | |
| | | | **TECHNICAL FIELDS SEARCHED (Int.Cl.7)** |

The present search report has been drawn up for all claims

| Place of search | Date of completion of the search | Examiner |
|---|---|---|
| BERLIN | 26 January 2000 | Kassow, H |

EPO FORM 1503 03.82 (P04C01)

## ANNEX TO THE EUROPEAN SEARCH REPORT
## ON EUROPEAN PATENT APPLICATION NO.

EP 99 30 8972

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2000

| Patent document cited in search report | | Publication date | Patent family member(s) | | Publication date |
|---|---|---|---|---|---|
| EP 0750419 | A | 27-12-1996 | JP 9009086 A | | 10-01-1997 |
| | | | US 5619427 A | | 08-04-1997 |
| WO 9408274 | A | 14-04-1994 | DE 69324150 D | | 29-04-1999 |
| | | | DE 69324150 T | | 28-10-1999 |
| | | | EP 0664015 A | | 26-07-1995 |
| | | | EP 0884894 A | | 16-12-1998 |
| | | | JP 8502394 T | | 12-03-1996 |
| | | | US 5786908 A | | 28-07-1998 |
| US 5491568 | A | 13-02-1996 | NONE | | |
| EP 0674429 | A | 27-09-1995 | US 5452112 A | | 19-09-1995 |
| | | | JP 8046750 A | | 16-02-1996 |

For more details about this annex : see Official Journal of the European Patent Office, No. 12/82